(19) Europäisches Patentamt
European Patent Office
Office européen des brevets

(11) Publication number: **0 086 598**
**A1**

# (12) EUROPEAN PATENT APPLICATION

(21) Application number: **83300545.7**

(22) Date of filing: **03.02.83**

(51) Int. Cl.³: **A 01 N 47/26**, A 01 N 47/14
//
(A01N47/26, 47/14, 43/ 54),
(A01N47/14, 43/54)

(30) Priority: **05.02.82 GB 8203443**

(43) Date of publication of application: **24.08.83**
**Bulletin 83/34**

(84) Designated Contracting States: **AT BE CH DE FR GB IT LI LU NL SE**

(71) Applicant: **Lilly Industries Limited, Lilly House Hanover Square, London W1R 0PA (GB)**

(72) Inventor: **Brown, Irwin Frederick, Jr., 11045 Winding Brook Lane, Indianapolis Indiana 46280 (US)**

(74) Representative: **Hudson, Christopher Mark et al, Erl Wood Manor, Windlesham Surrey GU20, 6PH (GB)**

## (54) Fungicidal formulations.

(57) A fungicidal formulation is described, which comprises a pyrimidine of formula

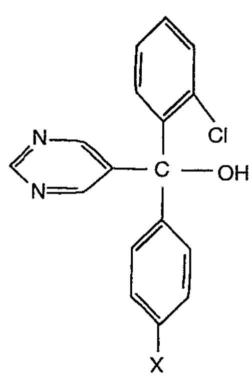

(I)

where X is chlorine or fluorine, and metiram. The formulation is useful in the control of fungal diseases on fruit crops, especially apple and pear trees.

EP 0 086 598 A1

0086598

# FUNGICIDAL FORMULATIONS

This invention relates to fungicidal formulations and to methods of treating fungal diseases of fruit crops.

The invention provides a fungicidal formulation comprising a pyrimidine of formula

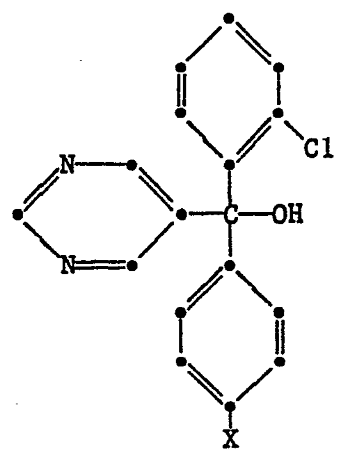

(I)

where X is chlorine or fluorine, and metiram.

Both the pyrimidine compounds of formula (I) and metiram are well known fungicides and are the subject of extensive literature. For example the pyrimidines of formula (I) are described in British Patent 1 218 623 whilst metiram is the subject of British Patent 840 211.

The combinations of active ingredients in the above formulation are novel and have been found to be surprisingly effective in controlling or combatting fungal diseases of fruit crops. They are of value in the treatment of a wide range of fruit crops susceptible to fungal attack and especially fruit trees such as apples and pears, in controlling for instance fungi such as powdery mildew (Podosphaera leucotricha) and scab (Venturia inaequalis).

According to a further aspect of the invention there is provided a method of treating a fungal infection of a fruit crop which comprises applying to the crop a fungicidally effective amount of a formulation as defined above. The formulation is preferably applied by foliar application at any time before harvesting. The amount and frequency of application will depend on the severity of the fungal disease and the condition of the crop. It has, however, been found that the frequency of treatment can be reduced by the use of the formulation of the invention and a valuable reduction in labour cost is achieved thereby.

In the case of fruit trees it is preferred to apply a foliar spray in which the component of formula (I) is applied at a rate of from 30 to 100 g per hectare, and metiram at a rate of from 300 to 3000 or 4000 g per hectare. Thus the ratio of compounds of formula (I) to that of metiram is preferably from 1:10 to 1:100 by weight, for example, from 1:10 to 1:50 and most preferably from 1:15 to 1:20.

The formulation of the invention will usually be associated with one or more inert, non-phytotoxic carriers. Although the formulations usually contain the two fungicides as sole active ingredients, it is to be understood that they can also include additional fungicide ingredients. In order to simplify manufacture, storage and transport, combinations are normally produced in concentrate form intended for dilution in water to the degree necessary to give the above mentioned application rates. Such concentrated formulations may contain from 0.5 to 90%, preferably from 5% to 90% or from 50% to 90%, by weight of active ingredients associated with an inert non-phytotoxic carrier. Such formulations

will usually be in the form of a wettable powder, a suspension concentrate or dust.

The concentrate formulations are intended for dilution with water or other suitable substances prior to use in conventional spray tanks or for aerial application and it is to be understood that the diluted formulations so produced are formulations in accordance with the invention in which the inert non-phytotoxic carrier is water or other suitable substance.

Wettable powders or dusts comprise an intimate mixture of the active ingredients, an inert carrier and an appropriate surfactant. The inert carrier may be chosen from for example attapulgite clays, montmorillonite clays, diatomaceous earths, precipitated silica, kaolins, micas, talcs and purified silicates. Effective surfactants can be selected from sulphonated lignins, naphthalene sulphonates and condensed naphthalene sulphonates, alkyl succinates, alkylbenzene sulphonates, alkyl sulphates and nonionic surfactants such as ethylene oxide adducts of phenol. Examples of wettable powders are those having the following composition:

Wettable Powders

| | % by weight |
|---|---|
| Formula I compound | 3 to 5 |
| Metiram | 70 to 80 |
| Surfactants | 4 to 10 |
| Anticaking agent | 0 to 15 |
| Inert carrier | to 100 |

Suspension concentrates comprise a suspension of the active ingredients, a surfactant, a suspending agent and water. Examples of suspension concentrates are those having the following composition:

Suspension Concentrates

| | |
|---|---|
| Formula I compound | 0.5 to 4 |
| Metiram | 40 to 60 |
| Surfactants | 5 to 10 |
| Suspending agent | 0.1 to 0.5 |
| Antifoaming agent | 0 to 2 |
| Antifreezing agent | 0 to 10 |
| Water | to 100 |

The pyrimidine of formula (I) in which X is chlorine is commonly known as fenarimol and is available from Eli Lilly and Company as for example Bloc, Rimidin and Rubigan, and the compound of formula (I) in which X is fluorine is known as nuarimol, available from Eli Lilly and Company as for example Trimidal and Triminol.

Metiram is also defined as a mixed precipitation consisting of the ammonia complex of zinc ethylenebis(dithiocarbamate) and poly[ethylenebis(thiuram disulphide)]. It is available under the trade mark Polyram from BASF AG.

The invention also includes a process for preparing a wettable powder or suspension concentrate comprising as active ingredients a pyrimidine of formula (I) above and metiram, which comprises blending the active ingredients with excipients and milling the blend to give the requisite particle size, which is preferably of mean diameter less than 50 microns.

The following Examples illustrate the invention.

EXAMPLES 1 and 2

(1) Wettable powders are prepared from the following ingredients:

| | % by weight |
|---|---|
| Fenarimol or nuarimol | 5 |
| Metiram | 75 |
| Sodium dioctyl sulphosuccinate | 3 |
| Sodium salt of sulphonated kraft lignin | 3 |
| Precipitated silica | 5 |
| Kaolin | to 100 |

(2) Suspension concentrates are prepared from the following ingredients:

| | % by weight |
|---|---|
| Fenarimol or nuarimol | 2 |
| Metiram | 50 |
| Sodium alkyl naphthalene sulphonate | 2 |
| Sodium salt of sulphated naphthalene condensate | 3 |
| Ethylene glycol | 5 |
| Silicone antifoam emulsion | 0.5 |
| Xanthan gum | 0.3 |
| Water | to 100 |

In the above Examples, the active ingredients are carefully blended with the excipients in conventional mixing equipment. The

blend is then milled in a fluid energy mill to a size of from 1 to 10 microns and finally the mixture is reblended and deaerated.

EXAMPLE 3

The following Example illustrates the typical synergistic activity observed when combinations of the invention are employed in controlling fungal organisms.

A field trial was conducted in which fenarimol at 20 or 40 grams per acre was applied to apple trees alone and in combination with 1000 grams per acre of metiram. Metiram was also applied alone at this rate. Foliar scab evaluations were made at two different times of the growing season.

The trees were sprayed with a suitable aqueous dispersion. Ten spray applications were made at 14 day intervals beginning on April 21st. A first assessment was made on June 12th (1) and a second assessment on July 23rd (2), with the following results:

Percent control of Venturia inaequalis (scab of apple) on apple foliage treated with fenarimol and/or metiram

| Fenarimol (grams/acre) | Metiram (grams/acre) 0 | | 1000 | |
|---|---|---|---|---|
| | (1) | (2) | (1) | (2) |
| 0 | 0(56)* | 0(68)* | 71 | 60 |
| 20 | 33 | 0 | 95 | 94 |
| 40 | 80 | 48 | 99 | 96 |

* disease incidence in the controls.

When analysed by the well known "Colby equation" (see Weeds, 15, 20-22 (1967)) the above results clearly demonstrated synergism under the conditions of the test.

0086598

CLAIMS

1. A fungicidal formulation comprising a pyrimidine of formula

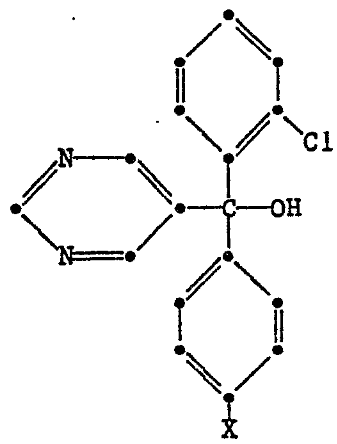

(I)

where X is chlorine or fluorine, and metiram.

2. A fungicidal formulation according to claim 1 in which the ratio of compound of formula (I) to that of metiram is 1:10 to 1:100 by weight.

3. A fungicidal formulation according to either of claims 1 and 2 in the form of a concentrate wettable powder, suspension concentrate or dust.

4. A fungicidal formulation according to claim 3 comprising 5 to 90 per cent by weight of active ingredients.

5. A fungicidal formulation according to claim 4 in the form of a wettable powder comprising 3 to 5 per cent by weight of a compound of formula (I) and 70 to 80 per cent by weight of metiram.

6. A method of treating a fungal infection of a fruit crop which comprises applying to the crop a fungicidally effective amount of a pyrimidine of formula (I) in claim 1 and metiram.

7. A method according to claim 6 which comprises utilising a formulation according to claim 2.

8. A method according to either of claims 6 and 7 which comprises applying the formulation to apple or pear crops.

9. A method according to claim 8 in which the formulation is applied as a foliar spray at a rate of from 30 to 100 g per hectare of the compound of formula (I) and from 300 to 3000 g per hectare of metiram.

European Patent Office

# EUROPEAN SEARCH REPORT

0086598
Application number

EP 83 30 0545

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 435 906 (SIPCAM) * Claims 1-3, claims 7-10; page 9, lines 26-34 * ----- | 1-9 | A 01 N 47/26 A 01 N 47/14 // (A 01 N 47/26 A 01 N 47/14 A 01 N 43/54 ) (A 01 N 47/14 A 01 N 43/54 ) |
| | | | TECHNICAL FIELDS SEARCHED (Int. Cl. 3) |
| | | | A 01 N |

The present search report has been drawn up for all claims

| Place of search | Date of completion of the search | Examiner |
|---|---|---|
| THE HAGUE | 18-05-1983 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82